# EUROPÄISCHE PATENTSCHRIFT

(11) **EP 2 294 701 B1**
(45) Veröffentlichungstag und Bekanntmachung des Hinweises auf die Patenterteilung: **19.08.2015**
(21) Anmeldenummer: 09774645.7
(22) Anmeldetag: 11.11.2009
(51) Int. Cl.: H04B 1/00

(54) **FRONTENDMODUL UND VERFAHREN ZUM TESTEN EINES FRONTENDMODULS**
FRONT END MODULE AND TESTING METHOD FOR THE MODULE
MODULE D'ENTRÉE ET PROCEDÉ POUR TESTER LE MODULE

(30) Priorität: 10.12.2008 DE 102008061474
(43) Veröffentlichungstag der Anmeldung: 16.03.2011
(73) Patentinhaber: Epcos AG, 81669 München (DE)
(72) Erfinder: TIKKA, Pasi, 81549 München (DE); PRZADKA, Andreas, 81825 München (DE); SCHULER, Jörg, 438794 Singapore (SG)
(74) Vertreter: Epping - Hermann - Fischer
(86) Internationale Anmeldenummer: PCT/EP2009/065007
(87) Internationale Veröffentlichungsnummer: WO 2010/066526

(56) Entgegenhaltungen:
- EP-A1- 1 511 184
- WO-A2-2004/091109

## Beschreibung

Die Erfindung betrifft ein Frontendmodul, mit welchem ein vereinfachtes Testverfahren durchführbar ist, sowie ein Verfahren zum Testen des Frontendmoduls.

Frontendmodule werden in Endgeräten der mobilen drahtlosen Kommunikation und insbesondere in Handys eingesetzt. Sie stellen die Schnittstelle zwischen der HF-Elektronik, insbesondere dem RF-Transceiver und der Antenne dar. Sie umfassen Signalpfade für die vom Frontendmodul zu bedienenden Betriebsmodi, insbesondere für unterschiedlichen Sende- und Empfangsbändern zugeordnete Sende- und Empfangsbetriebe in unterschiedlichen Mobilfunksystemen. Zusätzlich enthält ein Frontendmodul Schalter, um zwischen den verschiedenen Betriebsmodi zu schalten.

Moderne Frontendmodule können z.B. mehr als zehn unterschiedliche Betriebszustände bedienen, die entsprechenden Sende- und Empfangsbetrieben in verschiedenen Mobilfunksystemen auch unterschiedlicher Mobilfunkstandards und sonstiger drahtloser Radio- und Kommunikationssysteme zugeordnet sind. Dementsprechend weisen moderne Frontendmodule einen komplexen Aufbau auf. Mit der Komplexität steigt aber auch der Aufwand, der nach der Herstellung zum Testen fertig gestellter Frontendmodule aufzubringen ist.

Bei herkömmlichen Testverfahren von Frontendmodulen werden deren Ein- und Ausgänge mit entsprechenden Ein- und Ausgängen von zum Beispiel einem Network-Analyser verbunden. Anschließend werden in den verschiedenen Betriebszuständen des Frontendmoduls Testroutinen durchgeführt, wobei an den Eingang Testsignale angelegt und am Ausgang die entsprechenden Ausgangssignale bestimmt werden. Als Ergebnis eines solchen Tests wird festgestellt, ob das Frontendmodul in sämtlichen Betriebszuständen den vorgegebenen Spezifikationen der Mobilfunk- und Kommunikationssysteme genügt oder nicht.

Das Testen der Betriebszustände erfolgt dabei seriell, so dass mit der Anzahl der möglichen Betriebszustände auch die dafür erforderliche Testzeit stark ansteigt.

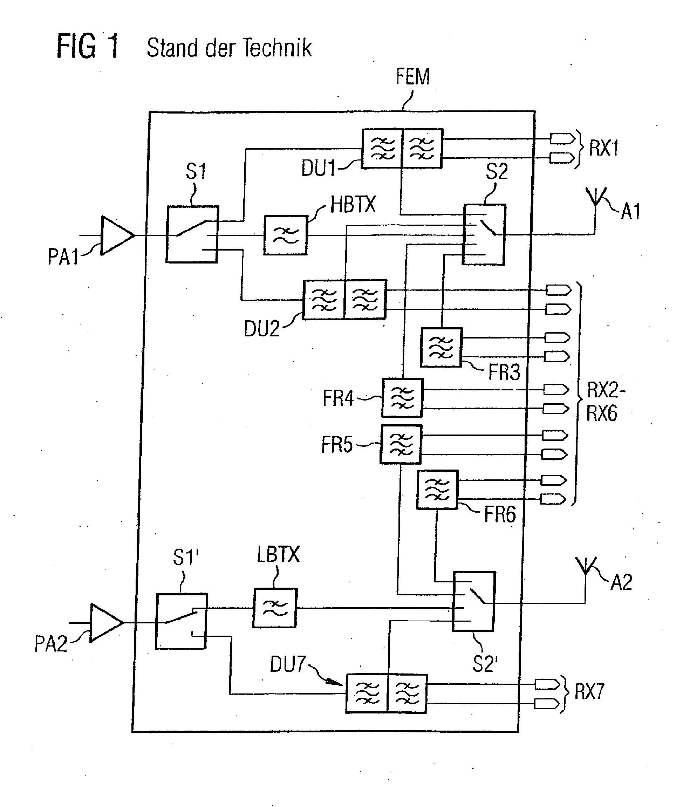

In Figur 1 ist beispielhaft das Schaltbild eines Frontendmoduls schematisch anhand eines Schaltplans dargestellt. Das Frontendmodul FEM kann vier GSM- und drei WCDMA-Mobilfunkstandards bedienen. Es ist in zwei Sektionen geteilt, die einem Low-Band- (500 bis ca. 1000 MHz) und einem High-Band-Bereich (1800 bis 2100 MHz) zugeordnet sind. Jede Sektion weist einen Sendeeingang, auf, der mit einem Leistungverstärker PA verbunden ist.

Direkt hinter jedem Sendeeingang ist ein erster Schalter S1 angeordnet, der den Sendeeingang mit einem der Signalpfade verbindet. In jedem der Signalpfade ist entweder ein Duplexer DU oder ein Sendefilter (HBTX, LBTX) angeordnet. Jede Sektion weist einen Antenrtenanschluss für eine eigene Antenne A1, A2 auf. Ein zweiter Schalter S2 verbindet den Antennenanschluss mit einem Duplexer DU oder einem Sendefilter HBTX, LBTX.

Ebenfalls mit dem zweiten Schalter S2, S2' verbunden sind Empfangssignalpfade, in denen jeweils ein Empfangsfilter FR3 bis FR6 angeordnet sind. Die Empfangsfilter FR3 bis FR5 sowie die Empfangsteilfilter der Duplexer DU sind mit Empfangsausgängen RX1 bis RX7 verbunden.

Jeder der Duplexer DU1, DU2, DU7 kann ein WCDMA-Band im Sende- und Empfangsbetrieb bedienen und weist jeweils ein Sendeteilfilter und ein Empfangsteilfilter auf, die miteinander verschaltet sind.

Außerdem ist jede Sektion für den Betrieb in je zwei GSM-Mobilfunksystemen ausgelegt. Dazu weist jede Sektion ein gemeinsames Sendefilter HBTX für den High-Band-Bereich und LBTX für den Low-Band-Bereich auf, die als Tiefpassfilter für sämtliche GSM-Sendefrequenzen des jeweiligen Bereichs beziehungsweise der jeweiligen Sektion ausgelegt sind. Für die GMS-Mobilfunksysteme des High-Band-Bereichs dienen zwei Empfangsfilter FR3 und FR4, während die Empfangsfilter FR5 und FR6 für GSM-Empfangssignale des Low-Band-Bereichs ausgebildet und vorgesehen sind. Über den zweiten Schalter S2, S2' kann der jeweilige Antennenanschluss wahlweise mit einem der Duplexer, dem gemeinsamen Sendefilter oder einem der Empfangsfilter verbunden werden.

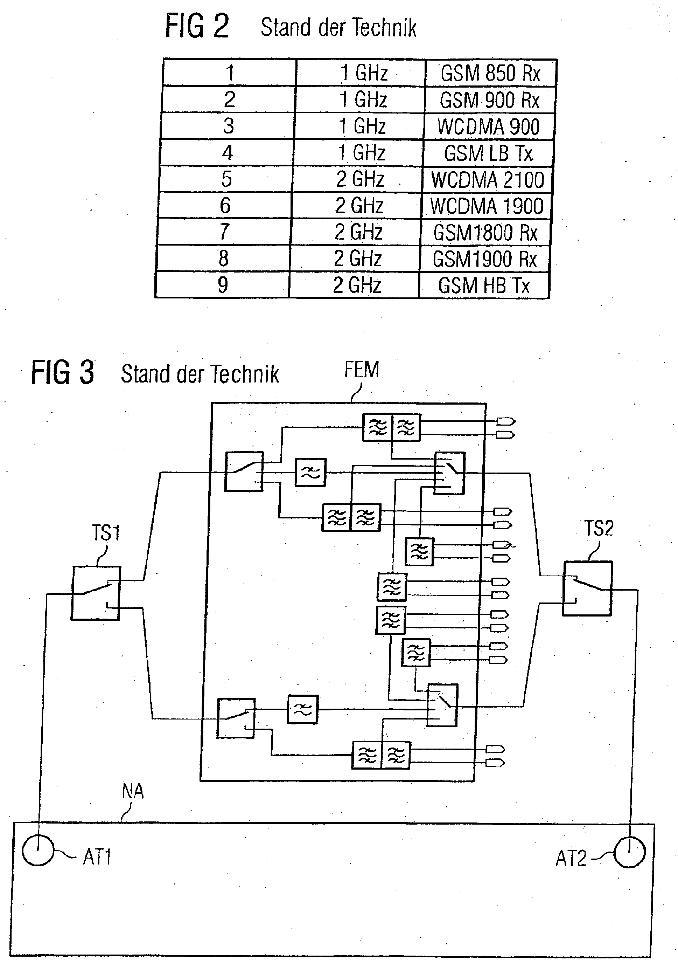

Figur 2 zeigt anhand einer dazugehörigen Modentafel die neun Betriebszustände, die über entsprechende Schalterstellungen der Schalter S1 und S2 in dem Frontendmodul FEM einstellbar sind. Die Betriebszustände eins bis vier sind jeweils der Low-Band-Sektion, die Betriebszustände fünf bis neun dagegen der High-Band-Sektion zugeordnet. In ansteigender Zahlenfolge sind die Betriebszustände eins bis neun einem GSM 850 Empfangsband, einem GSM 900 Empfangsband, einem Duplexbetrieb im WCDMA 900 System, dem GSM Low-Band-Sendeband, einem WCDMA 2100 Band, einem WCDMA 1900 Band, einem GSM 1800 Empfangsband, einem GSM 1900 Empfangsband und einem gemeinsamen GSM High-Band-Sendeband zugeordnet.

In einem Testverfahren für ein solches Frontendmodul am Ende des Herstellungsprozesses ist die sequenzielle Durchführung von neun Testroutinen erforderlich, die durch entsprechende sequenzielle Schaltung des Frontendmoduls in die neun Betriebszustände mit hohem zeitlichen Aufwand nacheinander durchgeführt werden müssen. Erste und zweite Schalter sind so ausgelegt, dass sie alle diese neun Betriebszustände einzeln bedienen können.

Figur 3 zeigt in schematischer Darstellung, wie ein Frontendmodul FEM zum Testen mit beispielsweise einem Network-Analyser NA verbunden werden kann. Dazu wird ein erster Anschluss AT1 des Network-Analysers mit einem ersten Testschalter T1 wahlweise mit einem der beiden Sendeeingänge beziehungsweise dem dahinter liegenden ersten Schalter verbunden. Ein zweiter Testschalter TS2 verbindet wahlweise den Antennenanschluss für die erste Antenne A1 beziehungsweise den weiteren Antennenanschluss für die zweite Antenne A2 mit dem zweiten Anschluss AT2 des Network-Analysers NA.

Das Dokument EP 1511 184 veröffentlicht ein weiteres Ausführungsbeispiel entsprechend dem Stand der Technik.

Aufgabe der vorliegenden Erfindung ist es, ein Frontendmodul anzugeben, welches konstruktionsbedingt so ausgelegt ist, dass ein vereinfachter und schnellerer Testbetrieb der unterschiedlichen Sende- und Empfangssignalpfade möglich wird.

Diese Aufgabe wird erfindungsgemäß mit einem Frontendmodul nach Anspruch 1 gelöst. Ein mit diesem neuen Frontendmodul nun erstmals mögliches Testverfahren sowie vorteilhafte Ausgestaltungen der Erfindung gehen aus weiteren Ansprüchen hervor.

Die Erfindung schlägt vor, im Frontendmodul neben den bislang bekannten normalen einzelnen Betriebszuständen zumindest einen verbundenen Betriebszustand vorzusehen, der für einen erleichterten Testbetrieb des Frontendmoduls genutzt werden kann. Der verbundene Betriebszustand umfasst insbesondere eine parallele Freischaltung mehrerer z.B. für Sendesignale genutzter Pfade durch das Frontendmodul. In weiteren verbundenen Betriebszuständen können mehrere Empfangssignalpfade parallel freigeschaltet werden. Möglich ist es auch, in einem verbundenen Betriebszustand einen für Sendesignale genutzten Signalpfad und einen Empfangssignalpfad gleichzeitig freizuschalten.

Das Freischalten eines Signalpfads und/oder eines Empfangssignalpfads erfolgt durch entsprechende Stellungen von erstem zweitem Schalter in einem Frontendmodul, das bezüglich seiner normalen Betriebsmodi beispielsweise dem in Figur 1 dargestellten bekannten Frontendmodul entspricht. In bekannten Frontendmodulen werden in der Regel SPnT (**S**ingle **P**ole **n T**hrough) eingesetzt, die einen Schaltereingang (single pole) wahlweise und alternativ mit jeweils nur einem der n verschiedenen Ausgänge verbinden. Für das vorliegende Frontendmodul wird nun jedoch ein Schalter vorgeschlagen bzw. benötigt, der einen Anschluss gleichzeitig mit mehreren Ausgängen verbinden kann, um das Frontendmodul in einen verbundenen Betriebszustand zu schalten. Da diese verbundenen Betriebszustände zusätzliche Betriebszustände sind, kann sich dadurch die Anzahl der Betriebszustände erhöhen und höher sein als die Anzahl der verschiedenen Betriebsmodi im Normalbetrieb. Ein Betriebsmodus im Normalbetrieb zeichnet sich durch die Auswahl eines Freqüenzbands sowie ggf. durch die Zuordnung zu einem Sende- oder Empfangsmodus aus. Ein gegebenes Mobilfunksystem eines gegebenen Standards weist in der Regel zwei Betriebszustände auf, nämlich einen Sendebetrieb in einem Sendeband und einen Empfangsbetrieb in einem Empfangsband. Ein für m Mobilfunksysteme ausgelegtes Frontendmodul kann bis zu 2m normale Betriebszustände aufweisen, wobei m eine ganze Zahl größer als eins ist.

Das vorgeschlagene Frontendmodul für ein drahtloses Kommunikationssystem ist für den Betrieb in mehreren Frequenzbändern ausgelegt. Es weist einen Sendeeingang für Sendesignale und einen Antennenanschluss auf. Es sind zumindest zwei Signalpfade vorhanden, die je einem Frequenzband zugeordnet sind und jeweils einen Sendeeingang mit einem Antennenanschluss verbinden. Zumindest ein erster Schalter ist vorgesehen, der den Sendeeingang wahlweise mit je einem der Signalpfade für einen normalen Betriebszustand verbindet. Ebenso weist das Frontendmodul einen Satz Steuerleitungen zum Schalten des ersten Schalters in verschiedene Betriebszustände auf, die Betriebszustände für den Normalbetrieb und für den Testbetrieb umfassen. Die Anzahl der für den Testbetrieb erforderlichen Betriebszustände ist mit einem erfindungsgemäßen Frontendmodul geringer als mit einem bekannten Frontendmodul, so dass der Aufwand zum Testen des Frontendmoduls durch die verringerte Anzahl zu testender Betriebszustände reduziert ist.

Weiter kann das Frontendmodul einen zweiten Schalter aufweisen, der den Antennenanschluss wahlweise mit je einem einzelnen der Signalpfade für den Normalbetrieb verbindet. Zusätzlich weist auch der zweite Schalter zumindest einen verbundenen Betriebszustand für einen Testbetrieb auf, bei dem eine gemeinsame Verbindung mehrerer Signalpfade mit dem Antennenanschluss vorgesehen wird.

Während ein verbundener Betriebszustand auf einer Schalterseite zumindest zwei Aus- beziehungsweise Eingänge öffnet, kann ein Frontendmodul auch kombinierte Betriebszustände aufweisen, die aus einer Kombination verbundener Betriebszustände in erstem und zweitem Schalter bestehen. Dabei ist es möglich, mit einem gemeinsamen Satz von Steuerleitungen gleichzeitig ersten und zweiten Schalter zu steuern.

Dabei kann es vorteilhaft sein, ersten und zweiten Schalter in Form eines gemeinsamen Schaltelements zu realisieren und insbesondere als gemeinsames Halbleiterbauelement auszubilden.

Im vorgeschlagenen Frontendmodul können also neben den normalen Betriebszuständen, das heißt neben den für den Normalbetrieb ausgelegten Betriebszuständen noch zumindest ein oder mehrere verbundene oder kombinierte Betriebszustände vorgesehen sein, in denen mehrere Signalpfade parallel frei geschaltet sind.

Für Frontendmodule, die sowohl für die Low-Band- als auch für die High-Band-Sektion ausgelegt sind, können insgesamt zwei Sendeeingänge und insbesondere zwei Antennen mit jeweiligen Antennenanschlüssen vorgesehen sein. Zum Schalten der zusätzlichen Signalpfade ist dieser weitere Sendeeingang mit einem weiteren ersten Schalter und der weitere Antennenanschluss mit einem weiteren zweiten Schalter verbunden, über die die Freischaltung einzelner Signalpfade für den Normalbetrieb sowie das parallele Freischalten mehrerer Pfade zu verbundenen Betriebszuständen und insbesondere zu kombinierten Betriebszuständen möglich ist.

Das Frontendmodul umfasst auch Empfangssignalpfade, die einen der Antennenanschlüsse über einen zweiten Schalter mit einem Empfangsausgang verbinden. Über ersten und zweiten Schalter können Normalbetriebszustände für reinen Empfangsbetrieb in einem Empfangssignalpfad, der für ein Mobilfunksystem ausgelegt ist, geschaltet werden. Zusätzlich können über ersten und zweiten Schalter verbundene Betriebszustände engestellt werden, bei denen ein Empfangssignalpfad und mit einem weiteren Empfangssignalpfad oder einem für Sendesignale ausgelegten Signalpfad verbunden beziehungsweise kombiniert freigeschaltet werden.

Es kann eine Anzahl von verbundenen Betriebszuständen vorgesehen werden, die ausreichend ist, alle Signalpfade für Sendesignale und Empfangssignalpfade zu testen. Möglich ist es jedoch auch, zum Testen eines Frontendmoduls verbundene Betriebszustände und normale Betriebszustände zu kombinieren. Diese Zustände können dann nacheinander mittels einer Testroutine getestet werden. Dabei ist jedoch die Anzahl der getesteten Betriebszustände stets geringer als die Anzahl möglicher Normalbetriebszustände, so dass mit dem erfindungsgemäßen Frontendmoduls stets ein vereinfachter Testbetrieb möglich ist.

Das Frontendmodul kann für unterschiedliche Mobilfunkstandards ausgelegt sein, so dass die Signalpfade und Empfangssignalpfade beispielsweise in GSM-Systemen und WCDMA-Systemen zugeordnet sein können. Für ein GSM-System sind in der Regel ein Signalpfad für Sendesignale zwischen Sendeeingang und Antennenanschluss und ein davon getrennter Empfangssignalpfad vorgesehen, der den Antennenanschluss mit einem Empfangsausgang verbindet. In beiden Pfaden ist je ein Sendefilter beziehungsweise Empfangsfilter vorgesehen.

In WCDMA-Systemen ist gleichzeitiges Senden und Empfangen möglich, wobei entsprechende Signale über einen Duplexer getrennt werden. Im Betriebszustand für einen WCDMA-Normalbetrieb ist der Duplexer über einen zweiten Schalter mit einem der Antennenanschlüsse verbunden. Gleichzeitig ist ein Sendesignalpfad durch eine entsprechende Schalterstellung des ersten Schalters und dem Sendeteilfilter des Duplexers freigeschaltet. Für ein WCDMA-System ist also für Sende- und Empfangsbetrieb nur eine Kombination von Schalterstellungen in erstem und zweitem Schalter erforderlich. In einem GSM-System dagegen muss für den Normalbetrieb in erstem und zweitem Schalter jeweils der entsprechende Pfad ausgewählt werden beziehungsweise der Antennenanschluss mit dem entsprechenden Empfangssignalausgang oder der Signalpfad für Sendesignale mit Sendesignaleingang und zweitem Schalter beziehungsweise Antennenanschluss verbunden werden.

Erste und zweite Schalter zur Einstellung des gewünschten Betriebszustands können beispielsweise in einem Galliumarsenid-Halbleiterkörper realisiert und insbesondere als HBT (Hetero-Bipolar-Transistor) ausgebildet sein. Möglich sind jedoch auch andere Schalter, insbesondere Pindioden auf Silizium oder einem anderen Halbleitermaterial sowie Schalter, die nicht in Halbleitertechnologie, sondern als mechanische oder elektromechanische Schalter und insbesondere als MEMS-Schalter ausgebildet sind. Vorteilhaft ist, wenn die Schalter in einfacher Weise über die Steuerleitungen in die entsprechenden Betriebszustände geschaltet werden können.

Neben der gemeinsamen Ansteuerung von ersten und zweiten Schaltern durch einen gemeinsamen Satz von Steuerleitungen beziehungsweise durch eine über diese Steuerleitungen geschickte Steuersignalfolge ist es auch möglich, beide Schalter einzeln und getrennt voneinander anzusteuern, wobei jedoch die Ansteuerung so erfolgt, dass entsprechend verbundene, gemeinsame und kombinierte Betriebszustände eingestellt werden können. Auch wenn über die normalen und verbundenen Betriebszustände insgesamt eine höhere Anzahl an Betriebszuständen und dementsprechend Schaltzuständen für erste und zweite Schalter erforderlich ist, so wird der höhere Aufwand im Modul durch den wesentlich reduzierten Aufwand beim Testen des Frontendmoduls mehr als kompensiert. Eine reduzierte Testzeit spart Kosten, dass das vorgeschlagene Frontendmodul auch kostengünstiger gegenüber vergleichbaren bekannten Frontendmodulen mit nur Normalbetriebszuständen ist.

Möglich ist es jedoch auch, in einem verbundenen Betriebszustand zwei Pfade und die damit verbundenen Betriebsarten so zu kombinieren, dass trotz paralleler Freischaltung zweier Pfade dennoch ein Normalbetrieb über einen der beiden Pfade möglich ist. Dies bedeutet, dass die verbundenen Betriebszustände für den Normalbetrieb nutzbar sind, ohne dass dieser durch den zusätzlich frei geschalteten Pfad gestört ist. Auf diese Weise reduziert sich die Anzahl der erforderlichen Betriebszustände, wobei auch in diesem Normalbetrieb alle Pfade sicher und störungsfrei betrieben werden können.

Für einen störungsfreien Betrieb ohne zu starkes Übersprechen zwischen den beiden Pfaden können solche Pfade kombiniert werden, die unterschiedlichen Sektionen des Frontendmoduls zugeordnet sind. So ist es vorteilhaft, einen Pfad aus der High-Band-Sektion mit einem Pfad aus der Low-Band-Sektion zu kombinieren. Weiterhin kann es vorteilhaft sein, zusätzlich zu der Sektionstrennung auch noch solche Pfade zu kombinieren, die unterschiedlichen Systemarchitekturen angehören. Dementsprechend kann einer der beiden verbundenen Betriebszustände für ein WCDMA-System ausgelegt sein, der andere hingegen für ein GSM-System.

Weiterhin ist es vorteilhaft, wenn unterschiedliche Frequenzen unterschiedlicher Frequenzbänder der verbundenen Betriebszustände keine Intermodulationsprodukte bilden können, die in einem störenden Bereich für den sicheren Betrieb des Frontendmoduls liegen. Verbundene Betriebszustände mit Pfaden, die zwar unterschiedlichen Sektionen, aber der gleichen Systemarchitektur angehören, ist es vorteilhaft, einen Signalpfad für Sendesignale und einen Empfangssignalpfad zu kombinieren.

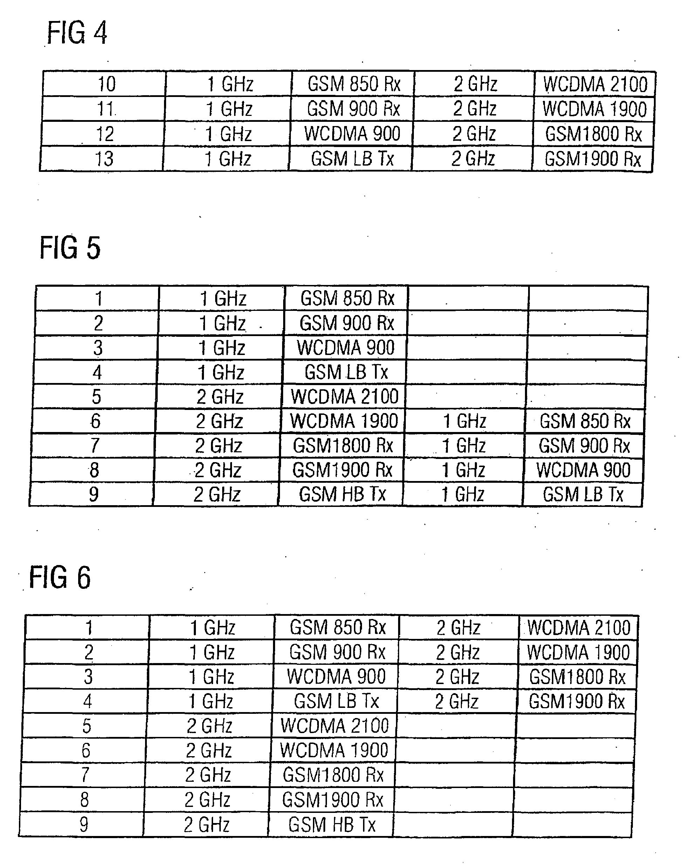

Im Folgenden wird die Erfindung anhand von Ausführungsbeispielen und der dazugehörigen Figuren näher erläutert. Figuren 4, 5 und 6 zeigen Mödentafeln, in denen Betriebszustände für den Normalbetriebs-, verbundene Betriebszustände und Kombinationen von normalen und verbundenen Betriebszuständen für ein erfindungsgemäßes Frontendmodul aufgelistet sind.

In den Ausführungsbeispielen wird von einem wie in Figur 1 dargestellten Frontendmodul FEM ausgegangen, bei dem erste Schalter S1, S1' und zweite Schalter S2, S2' erfindungsgemäß ausgebildet sind. Während ein bekanntes wie in Figur 1 dargestelltes Frontendmodul nur die in der Modentafel von Figur 2 aufgelisteten Betriebszustände für den Normalbetrieb schalten kann, werden in einem ersten Ausführungsbeispiel zusätzlich drei weitere verbundene Betriebszustände vorgesehen, die in Form entsprechend vorgebildeter bzw. mit dem Schalter einstellbarer Schaltzustände realisiert sind und die für den Testbetrieb des Frontendmoduls vorgesehen sind.

Figur 4 zeigt die Modentafel mit den verbundenen Betriebszuständen zehn bis 13. Im zusätzlichen Betriebszustand 10 ist als Low-Band-Betriebsart der Sendebetrieb im GSM 850 Empfangspfad mit dem gleichzeitigen Betrieb im WCDMA 2100 Mobilfunksystem kombiniert. Die hier verbundenen Betriebszustände unterschieden sich also bezüglich Systemarchitektur (GSM versus WCDMA) bezüglich der Sektion (Low-Band versus High-Band).

Im weiteren verbundenen Betriebszustand 11 wird der Empfangsbetrieb im GSM 900 Mobilfunksystem mit dem WCDMA 1900 Mobilfunksystem kombiniert.

In dem dritten zusätzlichen beziehungsweise verbundenen Betriebszustand mit der Betriebszustandsnummer 12 wird ein WCDMA 900 System mit dem Empfangsbetrieb im GSM 1800 Mobilfunksystem kombiniert.

Der Betriebszustand 13 kombiniert den Sendebetrieb in der Low-Band-Sektion für ein GSM System mit dem Empfangsbetrieb im GSM 1900 System. Obwohl hier zwei GSM Mobilfunksysteme kombiniert sind, so unterscheiden sich diese doch bezüglich der Betriebsart Senden/Empfangen als auch bezüglich der Sektion (Low-Band/High-Band).

Mit den verbundenen Betriebszuständen 10 bis 13 gelingt es, ein Testverfahren für das Frontendmodul durchzuführen und dabei die Pfade für acht der normalen Betriebszustände eins bis acht in verbundenen Betriebszuständen zu testen, ohne dass eine gegenseitige Wechselwirkung der Pfade im Testbetrieb zu befürchten ist. Der Pfad für den verbleibenden neunten Normalbetriebszustand wird in diesem Ausführungsbeispiel unverbunden und separat getestet. Zum Testen des Frontendmoduls ist es also nur noch erforderlich, vier verbundene Betriebszustände und einen Normalbetriebszustand sequenziell zu testen, wobei die dafür erforderliche Testzeit gegenüber dem sequentiellen Testen von 9 Normalbetriebszuständen nahezu halbiert ist.

In Figur 5 ist eine Modentafel dargestellt, die die Betriebszustände gemäß einem weiteren Ausführungsbeispiel auflistet. Die Modentafel enthält insgesamt neun Betriebszustände, von denen vier verbundene Betriebszustände sind. Die verbundenen Betriebszustände bestehen dabei nur aus solchen Kombinationen von Pfaden, in denen einzelne der verbundenen Pfade auch im Normalbetrieb genutzt werden können, ohne dass sie von dem parallel freigeschalteten zweiten Pfad beeinflusst werden. Auch dies gelingt wieder mit der Randbedingung, dass nur Pfade aus unterschiedlichen Sektionen zu verbundenen Betriebszuständen kombiniert werden.

Betriebszustand Nummer 1 ist als Normalbetriebszustand für den Empfangsbetrieb im GSM 850 Mobilfunksystem vorgesehen. Die Mode Nummer 2 ist als Normalbetriebszustand im Empfangsbetrieb für GSM 900 vorgesehen. Betriebszustand Nummer 3 ist ein reiner WCDMA 900 Normalbetriebszustand, während Betriebszustand Nummer 4 für den Sendebetrieb in der Low-Band-Sektion eines GSM Systems vorgesehen und reserviert ist. Die Mode (Betriebszustand) Nummer 5 ist ein normaler Betriebszustand für den Betrieb im WCDMA 2100 System. Im verbundenen Betriebszustand 6 sind die Pfade für ein WCDMA 1900 System und für den Empfangsbetrieb im GSM 850 kombiniert. Gleichzeitig dient diese Mode beziehungsweise dieser verbundene Betriebszustand für den Normalbetrieb des Frontendmoduls im WCDMA 1900 System. Der verbundene und gleichzeitig freigeschaltete GSM 850 Empfangssignalpfad stört den Normalbetrieb im WCDMA 1900 System nicht.

Im verbundenen Betriebszustand 7 ist der Empfangsbetrieb im GSM 1800 Mobilfunksystem mit dem Empfangsbetrieb im GSM 900 Mobilfunksystem kombiniert. Gleichzeitig kann dieser verbundene Betriebszustand für den normalen Empfangsbetrieb im GSM 1800 System genutzt werden. Im weiteren verbundenen Betriebszustand 8 ist die Empfangsbetriebsweise im GSM 1900 System mit dem WCDMA 900 System kombiniert. Gleichzeitig kann in diesem verbundenen Betriebszustand der GSM 1900 Empfangsbetrieb im Normalbetrieb des Frontendmoduls genutzt werden. Im letzten verbundenen Betriebszustand 9 ist der Sendebetrieb in der GSM High-Band-Sektion mit dem Sendebetrieb in der GSM Low-Band-Sektion kombiniert. Gleichzeitig dient der verbundene Betriebszustand 9 als normaler Betriebszustand für den Sendebetrieb in der GSM High-Band-Sektion.

Figur 6 listet in einem dritten Ausführungsbeispiel anhand einer Modentafel neun Betriebszustände für ein erfindungsgemäßes Frontendmodul auf, von denen vier verbundene Betriebszustände und fünf normale unverbundene Betriebszustände sind. Gleichzeitig kann jeweils einer der in einem verbundenen Betriebszustände freigeschalteten Pfade auch im Normalbetrieb genutzt werden. Im Ausführungsbeispiel sind im ersten Betriebszustand (Mode Nummer 1) die Empfangssignalpfade für den GSM 850 Betrieb mit dem WCDMA 2100 System kombiniert. Im Betriebszustand Nummer 2 ist der Empfangsbetrieb im GSM 900 System mit dem WCDMA 1900 System kombiniert. Im verbundenen Betriebszustand Nummer 3 ist das WCDMA 900 System mit dem Empfangsbetrieb im GSM 1800 System kombiniert. Der vierte und letzte verbundene Betriebszustand kombiniert den Sendebetrieb in der GSM Low-Band-Sektion mit dem Empfangsbetrieb im GSM 1900 Mobilfunksystem. Als unverbundene verbleibende Normalmode wird im Betriebszustand Nummer 5 das WCDMA 2100 System, im Betriebszustand Nummer 6 das WCDMA 1900 System, im Betriebszustand Nummer 7 der Empfangsbetrieb im GSM 1800 System, im Betriebszustand Nummer 8 der Empfangsbetrieb im GSM 1900 System und im Betriebszustand Nummer 9 der Sendebetrieb in der High-Band-Sektion des GSM Systems durchgeführt.

Die verbundenen Betriebszustände 1 bis 4 können darüber hinaus auch als normale Betriebszustände für den Betrieb in der jeweils zuerst genannten, jeweils der Low-Band-Sektion zugeordneten Betriebsart genutzt werden. Aufgrund der Zugehörigkeit zu unterschiedlichen Sektionen und der geeigneten Kombination von Frequenzen treten auch hier keine Intermodulationsprodukte oder wechselseitige Störungen auf, die den Normalbetrieb in der Low-Band-Sektion der verbundenen Betriebszustände stören könnten.

Ein erfindungsgemäßes Frontendmodul kann beispielsweise in einer wie in Figur 3 dargestellten Verschaltung getestet werden, wenn sicher gestellt ist, dass die beiden Testschalter TS1 und TS2 als zusätzliche dritte Schalterstellung eine Parallelschaltung der beiden Pfade hin zu ersten Sendeeingang und weiterem ersten Sendeeingang beziehungsweise hin zu zweitem Schalter und weiterem zweiten Schalter ermöglichen. Nur so kann ein verbundener Betriebszustand eingestellt und im Netzwerk-Analysator NA vermessen werden, der je einem Signalpfad aus erster und zweiter Sektion kombiniert.

Zum Vermessen eines Frontendmoduls wird dieses üblicherweise in einem Messadapter gesteckt, der die Anschlüsse des Frontendmoduls kontaktiert und mit entsprechenden Anschlüssen des Netzwerk-Analysators NA verbindet. Im Messadapter kann das Frontendmodul FEM mit Hilfe von Federkontakten gehalten sein, die ein einfaches und schnelles Ein- und Ausstecken des Frontendmoduls aus und in den Adapter und damit ein schnelles Wechseln zum nächsten Frontendmodul ermöglichen.

Zum Testen eines unverbundenen oder eines verbundenen Betriebszustandes wird nun eine Folge von Testsignalen, wechselseitig an einem der beiden Anschlüsse AT1 und AT2 des Netzwerk-Analysators NA generiert und am jeweils anderen Anschluss das Ergebnis gemessen. Der besseren Übersichtlichkeit wegen sind in der Figur die Anschlüsse der Empfangssignalausgänge RX, die zum Testen in den Empfangsbetriebsarten des GSM Systems und auch der WCDMA Systeme ebenfalls mit dem Netzwerk-Analysator NA verbunden werden müssen, nicht dargestellt. Da die Verschaltung mit dem Netzwerk-Analysator NA ausschließlich zu Testzwecken erfolgt, ist es möglich, mehrere Empfangssignalausgänge RX parallel mit einem der Testanschlüsse AT gemeinsam zu verbinden.

Zum Testen wird nun eine Testroutine in einem ersten Testbetriebszustand durchgeführt. Ist die Testroutine für diesen Betriebszustand beendet, wird ein zweiter Betriebszustand geschaltet und erneut eine Testroutine durchgeführt. Das Testverfahren wird durch Wiederholung der Testroutinen in den unterschiedlichen, sämtliche verbundene Betriebszustände umfassenden Betriebszuständen durchgeführt, bis alle Pfade getestet sind.

Die in den einzelnen Testbetriebszuständen gemessenen Werte werden mit den vorgegebenen Spezifikationen für das Frontendmodul verglichen und dem getesteten Modul dementsprechend die Beurteilung. "entspricht der Spezifikation" beziehungsweise "entspricht nicht der Spezifikation" zugeordnet. Für die nicht der Spezifikation entsprechenden Frontendmodule ist es möglich, aus dem Testergebnis Rückschlüsse auf die Gründe zu ziehen, warum die Spezifikation verfehlt wurde. Dies kann dazu verwendet werden, möglicherweise fehlerhafte Produktionsprozesse anzupassen und damit die Fehlerquote zu verringern. Möglich ist es auch, einen zugeordneten Fehler, der zum Nichterreichen der Spezifikation geführt hat, durch Nachbesserungen oder Trimmen trimmbarer Komponenten und insbesondere trimmbarer Resonatoren oder passiver Bauelemente auf dem Frontendmodul zu korrigieren und somit nachträglich zum Erreichen der Spezifikation beizutragen.

Im Testverfahren werden zumindest alle verbundenen Betriebszustände zum Testen genutzt. Verbleibende zu testende Pfade, die nicht in einem verbundenen Betriebszustand freigeschaltet sind, werden entsprechend in der Schalterstellung ihres normalen Betriebszustands, in dem nur dieser Pfad freigeschaltet ist, getestet. Eine wesentliche Verkürzung der Zeit, die zum Durchführen des Testverfahrens erforderlich ist, ergibt sich allein durch die verringerte Anzahl der zu testenden Betriebszustände. Eine weitere Verbesserung kann erreicht werden, wenn solche Pfade zu verbundenen Betriebszustände parallel freigeschaltet werden, die ähnliche Testzeiten zur Durchführung der Testroutine benötigen. Damit wird die kürzest mögliche Gesamttestzeit erreicht.

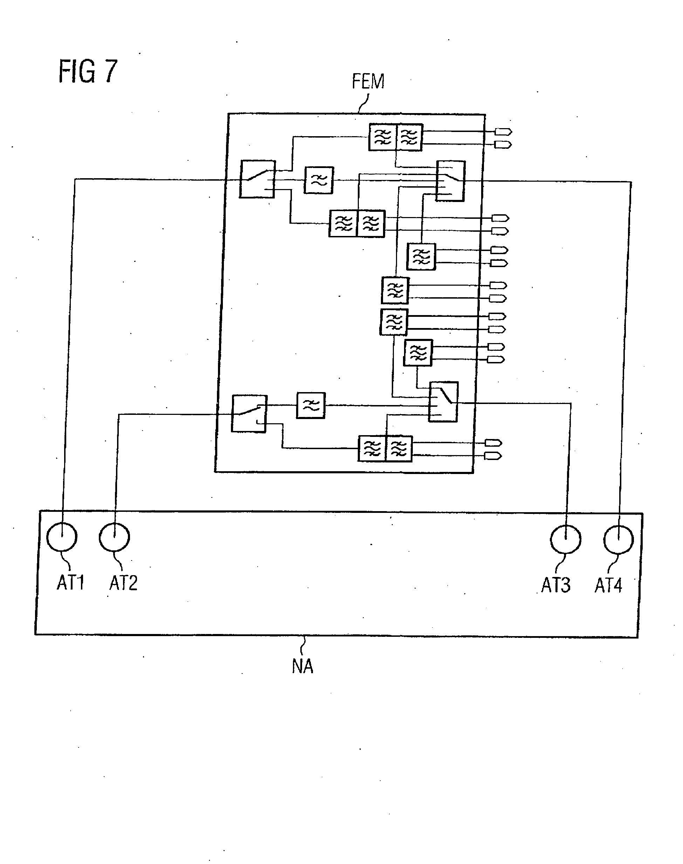

Figur 7 zeigt eine erfindungsgemäße Testanordnung, die das parallele Testen von in verbundenen Betriebszuständen parallel freigeschalteten Pfaden erlaubt. In der Figur ist wieder das aus dem Stand der Technik gemäß Figur 1 bekannte Frontendmodul FEM dargestellt. Hier sind die zwei Sendesignaleingänge, die jeweils im ersten oder im weiteren ersten Schalter münden, parallel mit entsprechenden Anschlüssen AT1, AT2 des Netzwerk-Analysators NA verbunden. Ebenso sind die beiden Antennenanschlüsse, beziehungsweise der mit dem jeweiligen Antennenanschluss verbundene zweite oder weitere zweite Schalter mit weiteren Anschlüssen AT3, AT4 des Netzwerk-Analysators NA verbunden.

Nicht dargestellt sind die Verbindungen der Empfangssignaleingänge RX mit entsprechenden Anschlüssen des Netzwerk-Analysators, um die Figur nicht zu komplex und unübersichtlich zu gestalten. Während der Messung sind dementsprechend alle Anschlüsse, die Ein- oder Ausgänge sein können, mit entsprechenden Anschlüssen AT des Netzwerk-Analysators NA verbunden. Während des Testens werden die entsprechenden Anschlüsse des Netzwerk-Analysators im Rahmen der Testroutine freigeschaltet. Parallel dazu wird an den Schaltern, die in einem einzigen Schaltelement realisiert sein können, anhand der Modenkontrolltafel der jeweilig zum Testen vorgesehene Betriebszustand eingestellt. Die Modentafel ist dabei physikalisch im Decoder des oder der Schalter integriert. Der Decoder kann auf CMOS-Basis ausgebildet und in einem Siliziumchip realisiert sein. Möglich ist es jedoch auch, den Decoder und damit die die Erfindung realisierende zusätzliche verbundene Betriebszustände aufweisende Modenkontrolltafel im gleichen Halbleiterbauelement wie der oder die Schalter zu realisieren.

Die Erfindung ist nicht auf ein Frontendmodul beschränkt, das wie dargestellt neun normale Betriebszustände aufweist. Ebenso wenig kann die Erfindung auf verbundene Betriebszustände entsprechend der dargestellten Ausführungsbeispiele eingeschränkt sein. Vielmehr ist die Erfindung breit auf sämtliche Frontendmodule mit einer beliebigen Anzahl von Sende-, Empfangs- und kombinierten Sende-Empfangspfaden anwendbar, die in beliebiger Anzahl und Zusammenstellung mithilfe der Erfindung einer im vereinfachten Testverfahren zugänglich sind. In allen Fällen sind die zusätzlichen Betriebszustände physikalisch am Frontendmodul beziehungsweise dem darauf befindlichen Schalter oder Controller realisiert. Vorteil ist in jedem Fall ein vereinfachtes und verkürztes Testverfahren, welches neben der Zeit Aufwand und damit Kosten spart.

**Bezugszeichenliste**

| **Symbol** | **Begriff** |
|---|---|
| A | Antennenanschluss |
| A' | weiterer Antennenanschluss |
| DU | Duplexer |
| FR | Empfangsfilter |
| HBTX | Sendefilter HB |
| LBTX | Sendefilter LB |
| NA | Netzwerkanalysator |
| RX | Empfangssignalausgang |
| PA | Sendeeingang |
| S1 | Schalter, erster |
| S2 | Schalter, zweiter |
| TA | Anschluss NA |
| TS | Testschalter |
| S1 | Schalter, erster |
| S2 | Schalter, zweiter |
| TA | Anschluss NA |
| S1' | weiterer erster Schalter |

## Patentansprüche

1. Frontendmodul für ein drahtloses Kommunikationssystem,
- das für den Betrieb in mehreren Frequenzbändern für GSM und WCDMA ausgelegt ist,
- mit Signalpfaden, in denen jeweils ein Sendefilter oder ein Duplexer angeordnet ist
- mit einem Sendeeingang (PA) für Sendesignale
- mit einem Antennenanschluss (A), der über einen zweiten Schalter mit zumindest zwei Signalpfaden verbunden ist, die je einem Frequenzband zugeordnet sind
- bei dem der zweite Schalter außerdem mit Empfangssignalpfaden verbunden ist
- mit einem ersten Schalter (S1), der entsprechend einem eingestellten unverbundenen normalen Betriebszustand den Sendeeingang wahlweise mit einem der Signalpfade verbindet
- mit einem Satz Steuerleitungen
- wobei über den Satz der Steuerleitungen unverbundene normale Betriebszustände für den normalen Betrieb des Frontendmoduls in einem Sendeband, einem Empfangsband oder einem WCDMA System einstellbar sind,
**dadurch gekennzeichnet,**
- **dass** über den Satz der Steuerleitungen zusätzlich zu den normalen Betriebszuständen durch entsprechende Stellungen von erstem und zweitem Schalter zumindest ein verbundener Betriebszustand einstellbar ist,
- **dass** der verbundene Betriebszustand eine parallele Freischaltung umfasst:
• von mehreren für Sendesignale genutzten Pfaden, oder
• von mehreren Empfangssignalpfaden, oder
• von einem für Sendesignale genutzten Signalpfad und einem Empfangssignalpfad.

2. Frontendmodul nach Anspruch 1,
bei dem die beiden Schalter (S1,S2) mit einem einzigen Satz gemeinsamer Steuerleitungen in verschiedene kombinierte Betriebszustände geschaltet werden,
bei dem als kombinierte Betriebszustände sowohl das selektive Freischalten einzelner Signalpfade als auch das parallele Freischalten mehrerer Signalpfade in einem verbundenen Betriebszustand vorgesehen ist.

3. Frontendmodul nach einem der Ansprüche 1 oder 2,
bei dem weitere Signalpfade, ein weiterer erster Schalter (S1') und ein weiterer Sendeeingang (PA2) vorgesehen sind, wobei der weitere erste Schalter (S1') mit dem weiteren Sendeeingang (PA2) und jedem einzelnen der weiteren Signalpfade verbunden ist.

4. Frontendmodul nach einem der Ansprüche 1-3,
- bei dem ein weiterer zweiter Schalter (S2') und ein weiterer Antennenanschluss (A') vorgesehen sind,
- bei dem der weitere zweite Schalter den weiteren Antennenanschluss mit wahlweise mit einem oder mehreren der weiteren Signalpfade verbindet.

5. Frontendmodul nach einem der Ansprüche 1-4,
bei dem mehrere oder alle der ersten und zweiten Schalter (S1,S2) in einem einzigen Halbleiterbauelement realisiert sind.

6. Frontendmodul nach einem der Ansprüche 1-5,
bei dem in jedem Signalpfad entweder ein einzelnes Sendefilter oder ein Duplexer vorgesehen ist.

7. Frontendmodul nach einem der Ansprüche 1-6,
- bei dem mehrere Empfangssignalpfade und zu jedem Empfangspfäd ein jeweils damit verbundener Empfangsausgang vorgesehen sind,
- wobei in jedem Empfangssignalpfade ein Empfangsfilter oder einer der genannten Duplexer angeordnet ist,
- wobei jeder Empfangspfad einen Empfangsausgang mit einem Duplexer oder einem der zweiten Schalter verbindet,
- wobei der oder die zweiten Schalter als Betriebszustände neben der selektiven Verbindung je eines einzelnen der Signalpfade oder der Empfangssignalpfade mit dem Antennenanschluss noch eine gemeinsame Verbindung mehrerer Signalpfade oder Empfangssignalpfade mit dem Antennenanschluss vorsehen.

8. Verfahren zum Testen eines Frontendmoduls nach einem der Ansprüche 1-7,
- bei dem zumindest ein Sendeeingang (PA) und ein Antennenanschluss (A) mit entsprechenden Ein- und Ausgängen eines Netzwerkanalysators (NA) verbunden werden,
- bei dem erster oder zweiter Schalter (S1,S2) in einen ersten kombinierten Betriebszustand geschaltet werden,
- bei dem eine erste Testroutine durchgeführt wird, wobei über den Netzwerkanalysator an den Sendeeingang (PA) Testsignale angelegt und am Antennenanschluss (A) Testausgangssignale gemessen werden,
- bei dem erster oder zweiter Schalter in zumindest einen zweiten Betriebszustand geschaltet werden und
- bei dem auch in diesem zweiten Betriebszustand eine entsprechende zweite Testroutine durchgeführt wird,
- bei dem einer der getesteten Betriebszustände ein verbundener Betriebszustand ist, in dem mehrere Signalpfade gleichzeitig für die Testsignale frei geschaltet werden.

9. Verfahren nach Anspruch 8,
bei dem im verbundenen Betriebszustand zwei Pfade parallel frei geschaltet werden, die unterschiedlichen Mittenfrequenzen zugeordnet sind, die in unterschiedlichen Dekaden angeordnet sind.

10. Verfahren nach Anspruch 9,
bei dem im verbundenen Betriebszustand zwei Pfade parallel frei geschaltet werden, die unterschiedlichen Mobilfunksystemen zugeordnet sind und neben einem TDMA noch ein WCDMA System umfassen.

11. Verfahren nach einem der Ansprüche 9 oder 10,
bei dem im verbundenen Betriebszustand ein Signalpfad und ein Empfangssignalpfad parallel frei geschaltet werden.

12. Verfahren nach einem der Ansprüche 9 - 11,
- bei dem so viele Testroutinen in einer entsprechenden Anzahl von Betriebszuständen durchgeführt werden, dass alle Signalpfade und alle Empfangssignalpfade zumindest je einmal frei geschaltet sind,
- bei dem die Anzahl der durchgeführten Testroutinen geringer ist als die Anzahl der möglichen Betriebs-zustände im Normalbetrieb und geringer als die Gesamt-ianzahl aller Signalpfade und Empfangssignalpfade im Frontendmodul.

## Claims

1. Front-end module for a wireless communication system,
- which is designed for operation in a plurality of frequency bands for GSM and WCDMA,
- having signal paths in which in each case a transmission filter or a duplexer is arranged,
- having a transmission input (PA) for transmission signals
- having an antenna connection (A) which is connected via a second switch to at least two signal paths which are each associated with one frequency band,
- in which the second switch is also connected to receive signal paths,
- having a first switch (S1) which connects the transmission input selectively to one of the signal paths corresponding to a selected non-linked normal operating state,
- having a set of control lines
- wherein non-linked normal operating states for normal operation of the front-end module can be selected in a transmission band, a reception band or a WCDMA system via the set of control lines,
**characterized**
- **in that** at least one linked operating state can be selected via the set of control lines in addition to the normal operating states by appropriate settings of the first and second switch,
- **in that** the linked operating state comprises parallel activation:
• of a plurality of paths which are used for transmission signals, or
• of a plurality of receive signal paths, or
• of a signal path which is used for transmission signals and of a receive signal path.

2. Front-end module according to Claim 1,
wherein the two switches (S1, S2) are switched with a single set of common control lines to different combined operating states,
wherein both the selective enabling of individual signal paths and the parallel enabling of a plurality of signal paths are provided as combined operating states in a linked operating state.

3. Front-end module according to either of Claims 1 and 2, wherein further signal paths, a further first switch (S1') and a further transmission input (PA2) are provided, wherein the further first switch (S1') is connected to the further transmission input (PA2) and to each individual one of the further signal paths.

4. Front-end module according to one of Claims 1-3,
- wherein a further second switch (S2') and a further antenna connection (A') are provided,
- wherein the further second switch connects the further antenna connection selectively to one or more of the further signal paths.

5. Front-end module according to one of Claims 1-4,
wherein a plurality or all of the first and second switches (S1, S2) are provided in a single semiconductor component.

6. Front-end module according to one of Claims 1-5,
wherein either a single transmission filter or a duplexer is provided in each signal path.

7. Front-end module according to one of Claims 1-6,
- wherein a plurality of receive signal paths and a reception output to each reception path, which reception output is in each case connected thereto, are provided,
- wherein a reception filter or one of said duplexers is arranged in each receive signal path,
- wherein each reception path connects a reception output to a duplexer or to one of the second switches,
- wherein the second switch or switches provide as operating states not only the selective connection of individual signal paths or receive signal paths in each case to the antenna connection but also a common connection of a plurality of signal paths or receive signal paths to the antenna connection.

8. Method for testing a front-end module according to one of Claims 1-7,
- wherein at least one transmission input (PA) and one antenna connection (A) are connected to corresponding inputs and outputs of a network analyzer (NA),
- wherein first or second switches (S1, S2) are switched to a first combined operating state,
- wherein a first test routine is carried out, in which test signals are applied via the network analyzer to the transmission input (PA), and test output signals are measured at the antenna connection (A),
- wherein first or second switches are switched to at least one second operating state, and
- wherein a corresponding second test routine is also carried out in this second operating state,
- wherein one of the tested operating states is a linked operating state, in which a plurality of signal paths are enabled at the same time for the test signals.

9. Method according to Claim 8,
two paths are enabled in parallel in the linked operating state and are associated with different mid-frequencies which are arranged in different decades.

10. Method according to Claim 9,
wherein two paths are enabled in parallel in the linked operating state, are associated with different mobile radio systems and comprise a WCDMA system in addition to a TDMA system.

11. Method according to one of Claims 9 or 10,
wherein one signal path and one receive signal path are enabled in parallel in the linked operating state.

12. Method according to one of Claims 9 - 11,
- wherein a sufficient number of test routines are carried out in a corresponding number of operating states that all of the signal paths and all the receive signal paths are each enabled at least once,
- wherein the number of test routines carried out is less than the number of possible operating states in normal operation, and is less than the total number of all the signal paths and receive signal paths in the front-end module.

## Revendications

1. Module de tête de ligne pour un système de communication sans fil
- qui est conçu pour fonctionner dans plusieurs bandes de fréquences pour GSM et WCDMA,
- comprenant des chemins de signal, dans chacun desquels est disposé un filtre d'émission ou un duplexeur,
- comprenant une entrée d'émission (PA) pour des signaux émis
- comprenant une borne d'antenne (A) qui est reliée par un deuxième commutateur à au moins deux chemins de signal respectivement associés à une bande de fréquences,
- dans lequel le deuxième commutateur est relié en outre aux chemins de signal de réception
- comprenant un premier commutateur (S1) qui relie l'entrée d'émission, au choix, avec un des chemins de signal en fonction d'un état de fonctionnement normal non lié réglé
- comprenant un ensemble de lignes de commande
- les états de fonctionnement normaux non liés pour le fonctionnement normal du module de tête de ligne pouvant être réglés par le biais de l'ensemble de lignes de commande dans une bande d'émission, une bande de réception ou un système WCDMA,
**caractérisé en ce**
- **qu'**il est possible de régler au moins un état de fonctionnement lié par le biais de l'ensemble de lignes de commande en plus des états de fonctionnement normaux par des positions appropriées du premier et deuxième commutateur,
- **que** l'état de fonctionnement lié comprend une libération parallèle :
• de plusieurs chemins utilisés pour les signaux émis, ou
• de plusieurs chemins de signal de réception, ou
• d'un chemin de signal utilisé pour les signaux émis et d'un chemin de signal de réception.

2. Module de tête de ligne selon la revendication 1, avec lequel les deux commutateurs (S1, S2) sont connectés avec un ensemble unique de lignes de commande communes dans différents états de fonctionnement combinés, avec lequel les états de fonctionnement combinés prévus sont à la fois la libération sélective des chemins de signal individuels et la libération parallèle de plusieurs chemins de signal dans un état de fonctionnement lié.

3. Module de tête de ligne selon l'une des revendications 1 ou 2, avec lequel sont prévus des chemins de signal supplémentaires, un premier commutateur supplémentaire (S1') et une entrée d'émission supplémentaire (PA2), le premier commutateur supplémentaire (S1') étant relié avec l'entrée d'émission supplémentaire (PA2) et chacun des chemins de signal supplémentaires individuels.

4. Module de tête de ligne selon l'une des revendications 1 à 3,
- avec lequel sont prévus un deuxième commutateur supplémentaire (S2') et une borne d'antenne supplémentaire (A'),
- avec lequel le deuxième commutateur supplémentaire relie la borne d'antenne supplémentaire avec, au choix, un ou plusieurs des chemins de signal supplémentaires.

5. Module de tête de ligne selon l'une des revendications 1 à 4, avec lequel plusieurs ou la totalité des premiers et deuxièmes commutateurs (S1, S2) sont réalisés dans un seul composant semiconducteur.

6. Module de tête de ligne selon l'une des revendications 1 à 5, avec lequel il est prévu soit un filtre d'émission unique, soit un duplexeur dans chaque chemin de signal.

7. Module de tête de ligne selon l'une des revendications 1 à 6,
- avec lequel sont prévus plusieurs chemins de signal de réception et pour chaque chemin de réception une sortie de réception respectivement reliée à celui-ci,
- un filtre de réception ou l'un desdits duplexeurs étant disposé dans chaque chemin de signal de réception,
- chaque chemin de réception reliant une sortie de réception avec un duplexeur ou l'un des deuxièmes commutateurs,
- le ou les deuxièmes commutateurs prévoyant comme états de fonctionnement, en plus de la liaison sélective à chaque fois de l'un des chemins de signal ou des chemins de signal de réception avec la borne d'antenne, également une liaison commune de plusieurs chemins de signal ou chemins de signal de réception avec la borne d'antenne.

8. Procédé pour tester un module de tête de ligne selon l'une des revendications 1 à 7,
- selon lequel au moins une entrée d'émission (PA) et une borne d'antenne (A) sont reliées avec les entrées et les sorties correspondantes d'un analyseur de réseau (NA),
- selon lequel le premier ou le deuxième commutateur (S1, S2) sont commutés dans un premier état de fonctionnement combiné,
- selon lequel une première routine de test est effectuée, des signaux de test étant appliqués à l'entrée d'émission (PA) par le biais de l'analyseur de réseau et des signaux de sortie de test étant mesurés à la borne d'antenne (A),
- selon lequel le premier ou le deuxième commutateur sont commutés dans au moins un deuxième état de fonctionnement et
- selon lequel une deuxième routine de test correspondante est également effectuée dans ce deuxième état de fonctionnement,
- selon lequel l'un des états de fonctionnement testés est un état de fonctionnement lié dans lequel plusieurs chemins de signal sont libérés simultanément pour les signaux de test.

9. Procédé selon la revendication 8, selon lequel dans l'état de fonctionnement lié, deux chemins sont libérés en parallèle, auxquels sont attribuées des fréquences centrales différentes qui sont disposées dans des décades différentes.

10. Procédé selon la revendication 9, selon lequel dans l'état de fonctionnement lié, deux chemins sont libérés en parallèle, auxquels sont attribués des systèmes de radiocommunication mobile différents et, outre un système TDMA, comprennent encore un système WCDMA.

11. Procédé selon l'une des revendications 9 ou 10, selon lequel dans l'état de fonctionnement lié, un chemin de signal et un chemin de signal de réception sont libérés en parallèle.

12. Procédé selon l'une des revendications 9 à 11,
- selon lequel le nombre de routines de test effectuées correspond au nombre d'états de fonctionnement, de sorte que tous les chemins de signal et tous les chemins de signal de réception soient libérés au moins une fois chacun,
- selon lequel le nombre de routines de test effectuées est inférieur au nombre d'états de fonctionnement possibles en fonctionnement normal et inférieur au nombre total de tous les chemins de signal et chemins de signal de réception dans le module de tête de ligne.
